# FASCICULE DE BREVET EUROPEEN

(11) **EP 0 345 877 B1**
(45) Date de publication et mention de la délivrance du brevet: **07.09.1994**
(21) Numéro de dépôt: 89201398.8
(22) Date de dépôt: 01.06.1989
(51) Int. Cl.: G11B 11/10

(54) **Enregistreur magnéto-optique à champ magnétique modulé**
Magneto-optisches Aufzeichnungsgerät mit moduliertem Magnetfeld
Magneto-optical recorder with a modulated magnetic field

(30) Priorité: 07.06.1988 FR 8807544
(43) Date de publication de la demande: 13.12.1989
(73) Titulaire: Philips Electronics N.V., 5621 BA Eindhoven (NL); Philips and Du Pont Optical Company, 3435 SB Nieuwegein (NL)
(72) Inventeur: Van Nieuwland, Jacob, NL-5656 AA Eindhoven (NL); Heemskerk, Jacobus, NL-5656 AA Eindhoven (NL); Bakx, Johannes, NL-5656 AA Eindhoven (NL); Janse, Jan Jozias, NL-5656 AA Eindhoven (NL)
(74) Mandataire: Groenendaal, Antonius Wilhelmus Maria

(56) Documents cités:
- EP-A- 0 164 745
- GB-A- 2 119 558
- GB-A- 2 119 999
- PATENT ABSTRACTS OF JAPAN vol. 6, no. 233 (P-156)(1111) 19 novembre 1982, & JP-A-57 133503

## Description

La présente invention a pour objet un enregistreur magnéto-optique comprenant un système optique destiné à émettre un faisceau de rayonnement vers une couche thermo-magnétique d'un support d'enregistrement magnéto-optique, système optique qui est muni d'un dispositif de focalisation servant à focaliser le faisceau de rayonnement pour former un point de focalisation sur la couche thermo-magnétique un dispositif d'asservissement pour maintenir le point de focalisation sur ladite couche, ledit système d'asservissement étant agencé de manière à produire un signal de correction représentatif de la position de la couche thermo-magnétique par rapport au système optique, et un modulateur de courant pour moduler le courant traversant une bobine d'une tête magnétique d'enregistrement.

Un tel enregistreur est connu de l'article "Erasable magnéto-optical recording" par M. HARTMANN et collaborateurs dans Philips Technical Review vol 42 n°2 août 1985 pp.37-43.

Pour des raisons de dissipation thermique au niveau de la bobine ainsi que de consommation de puissance par l'enregistreur, il est souhaitable que le courant qui traverse la bobine lors d'une phase d'inscription soit le minimum compatible avec une inscription sûre sur le support. Or, l'évolution technique conduit à la mise en oeuvre de disques de grand diamètre à support plastique qui ne sont pas parfaitement plans et présentent une excursion parallèle à leur axe d'environ ± 0,5 mm.

Il en résulte alors que la valeur du champ magnétique à la surface du disque varie de point en point en fonction du voilage de celui-ci.

Les matériaux thermo-magnétiques actuellement disponibles nécessitent un champ magnétique d'environ 200 à 300 0e (15 900 à 23 900 A.m⁻¹) pour réaliser une inscription. Pour réaliser une inscription de manière sûre, on est conduit à utiliser des valeurs nominales de courant plus importantes de manière à assurer qu'en tout point et en tenant compte du voilage du disque, la valeur du champ soit toujours suffisante. Cette solution présente, outre l'inconvénient déjà mentionné d'accroître la dissipation thermique au niveau de la bobine et la consommation thermique de l'enregistreur, celui de produire en certains points du disque des valeurs de champ trop élevées engendrant un bruit d'écriture détériorant le rapport signal-bruit. De plus, le document JP-A-57 133 503 décrit un dispositif d'enregistrement magnéto-optique dans lequel, aux fins de l'enregistrement d'information, l'intensité du faisceau de rayonnement est modulée. L'intensité du champ magnétique engendré par la bobine est adaptée en fonction de l'erreur de focalisation pour maintenir constant le champ magnétique dans la couche thermomagnétique.

Le document GB-A-2 119 999 décrit un dispositif d'enregistrement magnéto-optique conçu pour enregistrer un signal vidéo. Dans ce cas, le faisceau de rayonnement est modulé selon la composante de luminance du signal vidéo, tandis que le champ magnétique engendré par la bobine est modulé selon la composante de chrominance.

Le document GB 2.119.558 décrit un dispositif d'enregistrement magnéto-optique dans lequel, aux fins de l'enregistrement, le faisceau de rayonnement est modulé selon l'information à enregistrer. De plus, dans ce dispositif, est déterminée la sensibilité du support d'enregistrement pour régler, en fonction de la sensibilité déterminée, l'intensité du champ magnétique engendré par la bobine.

La présente invention a pour but de remédier aux inconvénients décrits ci-dessus.

La présente invention a pour objet un enregistreur magnéto-optique tel que défini dans la revendication 1.

Selon une première variante de ce mode de réalisation, le système d'asservissement comporte un deuxième dispositif de translation pour déplacer axialement le dispositif de focalisation, et en ce que le dispositif de focalisation et la bobine sont disposés sur deux faces opposées du support, le premier et le deuxième dispositif de translation sont disposés en regard l'un de l'autre et en ce que le système d'asservissement est agencé pour appliquer le signal de correction aux entrées respectives desdits dispositifs de translation.

Selon un mode de réalisation particulièrement avantageux de cette variante, le premier et le deuxième dispositif de translation sont de type magnétique et de même structure et sont couplés au système d'asservissement de façon à être commandés en opposition de phase l'un par rapport à l'autre. Ceci permet de compenser les champs de fuite au voisinage du support thermo-magnétique.

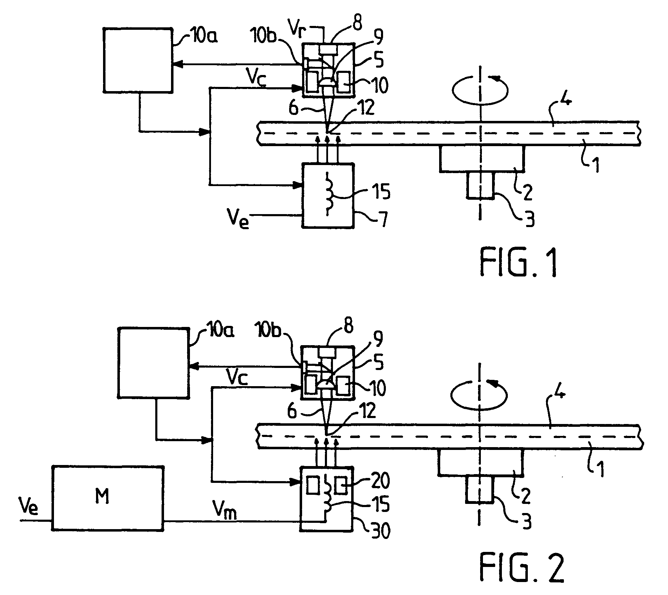

L'invention sera mieux comprise à la lecture de la description qui va suivre, donnée à titre d'exemple non limitatif, en liaison avec les desssins qui représentent :
- a la figure 1, un enregistreur magnéto-optique connu
- a la figure 2, un enregistreur magnéto-optique selon l'invention

Selon la figure 1, un disque 1 présentant une couche thermo-magnétique 4 par exemple telle que décrite dans Philips Technical Review vol 42 n°2 p.38-47 est disposé sur un plateau tournant 2 entraîné par un moteur 3. Une tête optique 5 comporte un laser 8 émettant un faisceau 6 repris par un dispositif de focalisation 9, pour la focalisation du faisceau 6 sur la couche.

Le point de focalisation est maintenu sur la couche à l'aide d'une boucle d'asservissement de focalisation, d'un type connu, décrite par exemple dans la demande de brevet européen 21510 déposée le 15 juin 1980 par la Demanderesse. Elle peut comporter un détecteur de focalisation 10b, un dispositif de commande 10a et un dispositif de translation 10. Le détecteur d'erreur de focalisation 10b produit un signal représentant l'erreur de focalisation. L'intensité du faisceau laser 8 est modulée en réponse à un signal Vr. Au cours d'une opération d'écriture, le signal Vr est tel que le faisceau laser présente une puissance permettant d'échauffer localement la couche 4 pour l'amener à une température d'enregistrement. Un dispositif d'enregistrement 7, comportant un circuit d'alimentation et une tête d'enregistrement présentant une bobine 15, est modulé par un signal d'enregistrement Vₑ. Le courant qui traverse la bobine 15 peut présenter l'une ou l'autre de deux valeurs correspondant à deux valeurs de champ opposées au niveau de la couche 4, au voisinage du point de focalisation 12.

Si le disque 1 n'est pas parfaitement plan, la distance entre la couche 4 et la bobine 15 varie périodiquement lors de la rotation du disque, selon le profil du voilage du disque. Il s'ensuit alors que la couche thermo-magnétique 4 ne voit pas un champ constant lorsqu'elle passe en face de la bobine 15.

Pour tenir compte de ce phénomène, il est possible d'augmenter le courant traversant la bobine 15 de manière qu'en toutes circonstances, le champ soit toujours suffisant pour réaliser une inscription sur la couche 4. Cependant, la dissipation thermique au niveau de la bobine et la consommation électrique du circuit d'alimentation de la tête magnétique, se trouvent augmentée et en outre, il est possible que, localement, le champ dépasse les valeurs souhaitées ce qui peut détériorer le rapport signal-bruit.

Pour ces raisons, il est souhaité qu'une compensation soit réalisée, tenant compte de la valeur réelle du champ au niveau de la couche 4.

On utilise le signal de correction V_{c} représentatif de la position de la surface de la couche 4 et qui est déjà disponible pour agir sur un paramètre agissant sur le champ produit par la bobine 15 dans la couche 4.

Selon la figure 2 le paramètre est la position de la bobine. Le signal de correction V_{c} est introduit à l'entrée d'un dispositif de translation 20 agencé pour déplacer la bobine 15 parallèlement à son axe de manière qu'elle répète les déplacements du point de focalisation 12, c'est-à-dire ceux du dispositif de focalisation 9 en l'occurence éclairé en lumière parallèle. Ce dispositif de translation 20 peut être avantageusement du même type que le dispositif électro-magnétique qui déplace le dispositif de focalisation 9. Dans le cas où, comme représenté, le laser 8 et le dispositif de focalisation 9 d'une part, et la bobine 15 d'autre part sont disposés en regard des faces opposées du disque 1, les deux dispositifs de translation, tous deux magnétiques et de même type, sont alors avantageusement alimentés en opposition de phase, et du fait de leur disposition symétrique par rapport à la position moyenne de la surface du disque, leurs champs de fuite se compensent au moins en grande partie au niveau de la couche 4.

Le circuit d'alimentation est un modulateur de courant M dont l'entrée reçoit le signal d'enregistrement Vₑ et qui produit en sortie un signal Vm d'alimentation en courant de la bobine 15 de la tête magnétique 30.

## Revendications

1. Enregistreur magnéto-optique comprenant un système optique (5) destiné à émettre un faisceau de rayonnement (6) vers une couche thermo-magnétique (4) d'un support d'enregistrement magnéto-optique (1), système optique qui est pourvu d'un dispositif de focalisation (9) servant à focaliser le faisceau de rayonnement pour former un point de focalisation sur la couche thermo-magnétique (4), et un dispositif d'asservissement (10,10a) pour maintenir le point de focalisation sur ladite couche (4), ledit système d'asservissement étant agencé de manière à produire un signal de correction représentatif de la position de la couche thermo-magnétique par rapport au système optique, et un modulateur (M) de courant pour moduler le courant traversant une bobine (15) d'une tête magnétique d'enregistrement (7) caractérisé en ce qu'il comporte un premier dispositif de translation (20) pour déplacer, en réponse au signal de correction, la bobine parallèlement à son axe, de façon qu'elle suive le déplacement du point de focalisation (12) de manière à ce que la valeur du champ dans la couche thermo-magnétique (4) soit pratiquement indépendante de la position de ladite couche (4).

2. Enregistreur selon la revendication 1, caractérisé en ce que le système d'asservissement comporte un deuxième dispositif de translation (10) pour déplacer axialement le dispositif de focalisation (9), et en ce que le dispositif de focalisation (8) et la bobine (15) sont disposés sur deux faces opposées du support (4), en ce que le premier (20) et le deuxième (10) dispositif de translation sont disposés en regard l'un de l'autre, et en ce que le système d'asservissement est agencé pour appliquer le signal de correction à leurs entrées respectives.

3. Enregistreur selon la revendication 2 caractérisé en ce que le premier et le deuxième dispositif de translation (10, 20) sont de type magnétique et de même structure et sont couplés au système d'asservissement de façon à être commandés en opposition de phase l'un par rapport à l'autre.

## Claims

1. Magneto-optical recorder comprising an optical system (5) for directing a radiation beam (6) towards a thermo-magnetic layer (4) of a magneto-optical record carrier (1), which optical system comprises a focusing device (9) for focusing the radiation beam so as to form a focal spot on the thermo-magnetic layer (4), and a servo system (10, 10a) for keeping the focal spot in focus on said layer (4), which servo system is constructed to produce a correction signal which represents the position of the thermo-magnetic layer relative to the optical system, and a current modulator (M) for modulating the current passing through a coil (15) of a magnetic recording head (7), characterized in that it comprises a first translation device (20) for moving the coil parallel to its axis in response to the correction signal, in such a way that the coil follows the displacement of the focal spot (12), so that the field value in the thermo-magnetic layer (4) is practically independent of the position of said layer.

2. Recorder as claimed in Claim 1, characterized in that the servo system comprises a second translation device (10) for axially moving the focusing device (9), in that the focusing device (9) and the coil (15) are arranged on opposite sides of the carrier (4), in that the first translation device (20) and the second translation device (10) are arranged facing each other, and in that the servo system is arranged to apply the correction signal to the respective inputs of said translation devices.

3. Recorder as claimed in Claim 2, characterized in that the first and the second translation device (10, 20) are magnetic translation devices and have a like construction and are coupled to the servo system in such a way that they are driven in phase opposition to each other.

## Patentansprüche

1. Magnetooptisches Aufzeichnungsgerät mit einem optischen System (5) zum Aussenden eines Strahlungsbündels (6) in Richtung einer thermomagnetischen Schicht (4) eines magnetooptischen Aufzeichnungsträgers (1), welches optische System mit einer Fokussierungsvorrichtung (9) zur Fokussierung des Strahlungsbündels zur Bildung eines Fokussierungspunktes auf der thermomagnetischen Schicht (4) versehen ist, und mit einem Servosystem (10, 10a), um den Fokussierungspunkt auf der genannten Schicht (4) zu halten, wobei das Servosystem so eingerichtet ist, daß es ein Korrektursignal erzeugt, das für den Ort der thermomagnetischen Schicht relativ zum optischen System repräsentativ ist, und einem Strommodulator (M) zur Modulation des durch eine Spule (15) eines Aufzeichnungsmagnetkopfes (7) fließenden Stroms, dadurch gekennzeichnet, daß es eine erste Translationsvorrichtung (20) umfaßt, um die Spule in Reaktion auf das Korrektursignal parallel zu ihrer Achse zu verschieben, so daß sie der Verschiebung des Fokussierungspunktes (12) in der Weise folgt, daß der Wert der Feldstärke in der thermomagnetischen Schicht (4) praktisch unabhängig von der Position der genannten Schicht (4) ist.

2. Aufzeichnungsgerät nach Anspruch 1, dadurch gekennzeichnet, daß das Servosystem eine zweite Translationsvorrichtung (10) umfaßt, zur axialen Verschiebung der Fokussierungsvorrichtung (9), und daß die Fokussierungsvorrichtung (9) und die Spule (15) an zwei entgegengesetzten Seiten des Trägers (4) liegen, daß die erste (20) und die zweite (10) Translationsvorrichtung einander gegenüberliegen und daß das Servosystem so eingerichtet ist, daß es das Korrektursignal deren jeweiligen Eingängen zuführt.

3. Aufzeichnungsgerät nach Anspruch 3, dadurch gekennzeichnet, daß die erste (20) und die zweite (10) Translationsvorrichtung Magnetvorrichtungen sind und von gleichem Aufbau und mit dem Servosystem so gekoppelt sind, daß sie in Gegenphase zueinander angesteuert werden.
